(19) Europäisches Patentamt
European Patent Office
Office européen des brevets

(11) **EP 4 184 801 A1**

(12) **DEMANDE DE BREVET EUROPEEN**

(43) Date de publication:
**24.05.2023 Bulletin 2023/21**

(21) Numéro de dépôt: **22208240.6**

(22) Date de dépôt: **18.11.2022**

(51) Classification Internationale des Brevets (IPC):
**H04B 7/06** *(2006.01)* **H01Q 21/06** *(2006.01)*
**H01Q 21/00** *(2006.01)*

(52) Classification Coopérative des Brevets (CPC):
**H04B 7/0617**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **19.11.2021 FR 2112247**

(71) Demandeur: **THALES**
**92400 Courbevoie (FR)**

(72) Inventeurs:
- LEGAY, Hervé
  **31830 PLAISANCE DU TOUCH (FR)**
- GIRARD, Etienne
  **31830 PLAISANCE DU TOUCH (FR)**
- FRAYSSE, Jean-Philippe
  **31200 TOULOUSE (FR)**
- VIDAL, Florian
  **31000 TOULOUSE (FR)**

(74) Mandataire: **Atout PI Laplace**
**Immeuble "Visium"**
**22, avenue Aristide Briand**
**94117 Arcueil Cedex (FR)**

(54) **ANTENNE RESEAU ACTIVE MULTIFAISCEAUX COMPORTANT UN DISPOSITIF HYBRIDE POUR LA FORMATION DE FAISCEAUX DIRECTIFS**

(57) L'invention concerne une antenne réseau active multifaisceaux comprenant des éléments rayonnants ($RE_1$-$RE_N$) et un dispositif hybride (20) pour la formation de faisceaux directifs ($Fd_1$-$Fd_p$). Le dispositif hybride comprend un étage analogique divisé en une pluralité de formateurs analogiques de faisceaux ($ABFN_1$-$ABFN_M$) formant des mêmes faisceaux régionaux ($Fr_1$, $Fr_2$, $Fr_3$), un étage numérique (208) adapté pour former les faisceaux directifs ($Fd_1$-$Fd_p$) à partir des faisceaux régionaux ($Fr_1$, $Fr_2$, $Fr_3$). Un premier sous-réseau ($Sr_1$) est associé à des premiers éléments rayonnants ($RE_1$-$RE_{24}$). Un second sous-réseau ($Sr_2$) est associé à des seconds éléments rayonnants ($RE16$-$RE18$, $RE22$-$RE42$). Le second sous-réseau ($Sr_2$) a les mêmes dimensions ($d_1$, $d_2$) que le premier sous-réseau. Le second sous-réseau ($Sr_2$) chevauchant partiellement le premier sous-réseau ($Sr_1$).

FIG. 1

EP 4 184 801 A1

**Description**

**Domaine de l'invention**

La présente invention concerne les antennes réseau actives multifaisceaux utilisées notamment dans le domaine des systèmes des télécommunications spatiales, ou des systèmes radar ou des systèmes de communications, fixes ou mobiles, terrestres, marins ou aéroportés.

**Etat de la technique**

Il est connu de l'art antérieur, l'utilisation d'antennes passives multifaisceaux. Elles sont usuellement constituées d'antennes réflecteur associées à des réseaux focaux multi-sources. Pour de telles antennes multifaisceaux fonctionnant à l'émission, la puissance de l'amplificateur associé à chaque élément rayonnant est rayonnée préférentiellement dans une direction donnée. Il est alors nécessaire de gérer l'allocation spatiale de la puissance, en fonction de la distribution spatiale du trafic. Cette contrainte d'allocation limite fortement la flexibilité de la charge utile, c'est-à-dire la possibilité de s'adapter à des variations de trafic. Les couvertures multifaisceaux permettent de réutiliser une même ressource fréquentielle en différents endroits de la couverture de l'antenne, et permettent donc d'augmenter le débit par le nombre de fois qu'une même ressource fréquentielle est réutilisée. L'allocation spatiale de la capacité s'opère alors par une affectation pour chaque faisceau d'un budget de puissance rayonnée et de ressources fréquentielles. La puissance globale rayonnée par une antenne passive est ainsi distribuée sur les différents faisceaux. La tendance de plus en plus prononcée pour les satellites à très haut débit est de réduire la taille des faisceaux et d'en augmenter le nombre pour profiter d'une forte réutilisation de la bande de fréquence. Au fur et à mesure que la taille des faisceaux diminue, la capacité allouée par faisceau est alors répartie sur une surface au sol de plus en plus étroite, et il devient difficile de modifier dynamiquement la capacité par faisceau à l'aide d'une architecture où uniquement une partie des éléments rayonnants de l'antenne contribuent pour chaque faisceau. L'antenne passive multifaisceaux présente ainsi une difficulté d'allocation de la ressource.

Pour pallier à ce problème, Il est connu l'utilisation d'antennes réseau actives multifaisceaux. Ce type d'antenne comprend des éléments rayonnants, des composants actifs tels que des amplificateurs et un formateur de faisceau, équipement appelé BFN en anglais (pour « Beam Forming Network »). Ces différents composants permettent de modifier les propriétés des faisceaux émis dans le domaine spatial. La puissance de l'amplificateur associée à chaque élément rayonnant est alors affectée sur la totalité de la zone géographique couverte par l'antenne. Il n'est alors plus nécessaire de gérer spatialement l'affectation de cette puissance rayonnée. Ce type d'antenne est adapté pour être monté dans des charges utiles flexibles de télécommunications spatiales à haut débit. Une antenne réseau active multifaisceaux est une antenne adaptée pour générer, en sortie, des faisceaux vers des zones géographiques particulières du globe terrestre à partir de signaux de communication préalablement reçus en entrée. L'antenne réseau active comprend pour cela des ports faisceaux et des ports éléments rayonnants pouvant fonctionner lorsque l'antenne est en émission et lorsque l'antenne est en réception. L'allocation spatiale de la capacité s'opère alors par une affectation pour chaque faisceau d'un budget de puissance rayonnée et de ressources fréquentielles.

Au contraire, une antenne réseau active multifaisceaux est caractérisée par le fait que tous les éléments rayonnants contribuent à tous les faisceaux. La puissance de l'amplificateur associé à chaque élément rayonnant est alors affectée sur la totalité de la zone géographie couverte par l'antenne. Il n'est plus alors nécessaire de gérer spatialement l'affectation de cette puissance rayonnée.

La synthèse de ces couvertures multifaisceaux avec des antennes réseaux actives est toutefois un objectif majeur. En effet ni une formation analogique de faisceaux, ni une formation numérique de faisceaux ne permettent de répondre aux challenges d'une grande antenne à très grand nombre d'éléments rayonnants.

Pour une antenne réseau active multifaisceaux, tous les éléments rayonnants contribuent à la formation de tous les faisceaux. Dans le cas d'une formation numérique de faisceaux, tous les éléments rayonnants doivent alors être numérisés sur la bande passante totale affectée à l'antenne.

La formation analogique de faisceaux permet de réduire le nombre d'accès à numériser, car le nombre d'accès faisceaux est usuellement inférieur au nombre d'accès éléments rayonnants, et ces signaux disponibles sur ces accès peuvent avoir une bande passante réduite. La formation analogique de faisceaux est toutefois limitée en implémentation par des considérations pratiques.

Il est connu de l'art antérieur de mettre en oeuvre une formation hybride de faisceaux, incluant un étage analogique et un étage numérique. L'étage analogique s'applique sur des sous-réseaux réalisés par un regroupement de plusieurs éléments rayonnants contigus et réalise plusieurs faisceaux régionaux. La largeur de ces faisceaux régionaux dépend du nombre du nombre d'éléments rayonnants associés dans les sous-réseaux. Les nombres d'éléments rayonnants et de faisceaux régionaux sont choisis inférieurs aux seuils de limitation technologique du formateur de faisceau analogique. L'étage numérique s'applique sur les signaux issus des accès faisceaux régionaux réalisés par l'étage analogique pour les différents sous-réseaux, permettant de former des faisceaux directifs à l'intérieur des faisceaux régionaux. Cette formation hybride de faisceau permet donc de s'affranchir de la limitation de l'étage analogique, tout en minimisant la consommation de l'étage numérique. En effet, cette consommation est pour une grande partie produite par les interfaces de numérisation des signaux. Celle-ci est d'autant plus grande que les bandes de fréquence à numériser sont élevées.

Cependant, la formation hybride de faisceaux est caractérisée par l'apparition de lobes de réseau lorsque le faisceau directif réalisé par l'étage numérique approche d'un bord du faisceau régional. Il s'ensuit une perte de gain et un risque d'apparition d'interférences avec des signaux alignés avec le lobe de réseau, si ces signaux ont la même allocation de ressource. Ces inconvénients conduisent à limiter le secteur angulaire à l'intérieur du lobe régional sur lequel des faisceaux directifs peuvent être réalisés. Ils limitent donc le nombre de faisceaux directifs qu'il est possible de réaliser numériquement et contribuent à limiter le débit.

Le document US83444945 divulgue une antenne réseau active multifaisceaux comprenant un formateur hybride de faisceaux directifs comportant un étage analogique et un étage numérique. L'étage analogique est divisé en une pluralité de sous-réseaux, chaque sous-réseau étant associé à plusieurs éléments rayonnants pour former des faisceaux régionaux. Dans ce document, des sous-réseaux se chevauchent, c'est-à-dire que des éléments rayonnants sont communs à plusieurs sous-réseaux. Ce chevauchement est réalisé d'une manière que les éléments rayonnants peuvent contribuer à un grand nombre de sous-réseaux, ce qui rend l'implémentation de l'étage analogique extrêmement complexe.

Il existe donc un besoin de trouver une solution présentant une complexité limitée et permettant la génération d'un grand nombre de faisceaux directifs tout en limitant les pertes de gain et l'apparition d'interférences.

**Exposé de l'invention**

L'objectif précité est atteint par une antenne réseau active multifaisceaux adaptée pour recevoir des signaux de communication. Cette antenne réseau active multifaisceaux comprend des éléments rayonnants, chaque élément rayonnant étant apte à fournir des signaux de sortie à partir des signaux de communication, lesdits éléments rayonnants étant arrangés dans une matrice d'éléments rayonnants, ladite matrice s'étendant selon une première direction et selon une seconde direction perpendiculaire à la première direction. L'antenne multifaisceaux comprend également un dispositif hybride pour la formation de faisceaux directifs. Ce dispositif hybride comprend un étage analogique divisé en une pluralité de formateurs analogiques de faisceaux. Chaque formateur analogique est associé à un sous-réseau regroupant plusieurs éléments rayonnants de la matrice pour former des faisceaux régionaux à partir des signaux de sortie desdits éléments rayonnants. Les sous-réseaux forment des mêmes faisceaux régionaux. Le dispositif hybride comprend également un étage numérique adapté pour former les faisceaux directifs à partir des faisceaux régionaux, lesdits faisceaux directifs formés étant contenus à l'intérieur des faisceaux régionaux. Un premier sous-réseau est associé à des premiers éléments rayonnants de la matrice M, ledit premier sous-réseau ayant une forme rectangulaire, présentant une première dimension selon la première direction de la matrice et une seconde dimension selon la seconde direction de la matrice. Un second sous-réseau est associé à des seconds éléments rayonnants de la matrice. Le second sous-réseau a les mêmes dimensions que le premier groupe sous-réseau. Le second sous-réseau chevauche partiellement le premier sous-réseau de sorte que des éléments rayonnants sont communs audit premier sous-réseau et audit second sous-réseau. Dans l'antenne multifaisceaux, le second sous-réseau est décalé par rapport au premier sous-réseau selon la première direction de la matrice d'un premier décalage correspondant à la moitié de la première dimension de la forme rectangulaire du sous-réseau et le second sous-réseau est décalé par rapport au premier sous-réseau selon la seconde direction de la matrice d'un second décalage correspondant à la moitié de la seconde dimension de la forme rectangulaire.

La solution proposée consiste à diviser les éléments rayonnants en au moins un premier groupe d'éléments rayonnants et un second groupe d'éléments rayonnants. Le second groupe d'éléments rayonnants est décalé d'une demi-période selon les deux axes par rapport au premier groupe d'éléments rayonnants. Des mêmes éléments rayonnants participent ainsi à deux sous-réseaux. Une formation analogique de faisceaux est alors appliquée à ces sous-réseaux. Elle est réalisée en appliquant une pondération en phase et en amplitude sur les signaux RF, qui dépend de la position des éléments rayonnants du sous-réseau et de la direction visée. La formation analogique forme un ou plusieurs faisceaux régionaux orientables sur le secteur angulaire choisi. Chaque sous-réseau forme les mêmes faisceaux régionaux. Une formation numérique de faisceaux est réalisée en complément dans le processeur numérique, en appliquant une pondération en phase et en amplitude. Cette pondération est applicable à chaque sous-réseau (un coefficient d'amplitude et de phase par sous-réseau). Cette pondération dépend de la position des éléments rayonnants au centre du sous-réseau et de la direction visée à l'intérieur du faisceau régional. L'invention permet alors de répondre à plusieurs objectifs. La décomposition du formateur en un étage analogique et un étage numérique permet de satisfaire aux contraintes d'implémentation technologique pour l'étage analogique, elle permet également de ne pas excéder un seuil paramétrable de puissance consommée pour l'étage numérique, tout en évitant l'apparition de lobes de réseaux générés par cette partition. En outre, en maximisant le nombre de faisceaux et le taux de réutilisation de ressources fréquentielles ou temporelles il est possible de maximiser le débit sur les zones de trafic dense, tout en évitant de gaspiller la puissance consommée sur les zones de trafic faible. Enfin, la formation entrelacée de faisceaux lorsque les groupes d'éléments rayonnants sont décalés d'une demi-période permet d'augmenter le nombre de faisceaux directifs d'un facteur quatre alors que la complexité des interfaces de numérisation n'a augmenté que d'un facteur inférieur à 2.

Dans un mode de réalisation particulier, la première dimension et la seconde dimension du premier sous-réseau sont identiques de sorte que le premier sous-réseau et le second sous-réseau ont une forme carrée.

Dans un mode de réalisation particulier, les faisceaux directifs ont différentes largeurs.

Dans un mode de réalisation particulier, l'étage analogique forme au moins deux faisceaux régionaux avec des largeurs différentes.

Dans un mode de réalisation particulier, les signaux de communication sont conformes à une loi uniforme ou à une loi apodisée.

Dans un mode de réalisation particulier, l'étage analogique comprend un formateur quasi-optique.

Dans un mode de réalisation particulier, le formateur quasi-optique comprend des lentilles de Rotman ou des lentilles de retard continu.

Dans un mode de réalisation particulier, l'antenne réseau active multifaisceaux est reconfigurable.

Dans un mode de réalisation particulier, l'étage analogique comprend un module d'accès multiple dans le temps adapté pour former au moins un faisceau régional reconfiguré, ledit faisceau régional reconfiguré se déplaçant au rythme d'une trame temporelle.

Dans un mode de réalisation particulier, l'étage analogique comprend un module d'accès multiple en fréquence adapté pour former plusieurs faisceaux régionaux contigus associés à des sous-bandes de largeur variable.

Dans un mode de réalisation particulier, le premier sous-réseau appartient à un premier groupe de sous-réseaux et le second sous-réseau appartient à un second groupe de sous-réseaux.

Dans un mode de réalisation particulier, le second groupe de sous-réseaux est décalé par rapport au premier groupe de sous-réseaux selon le premier décalage et selon le second décalage.

Un autre objet de l'invention concerne une antenne multifaisceaux selon l'invention.

**Brève description des dessins**

L'invention sera mieux comprise et d'autres avantages apparaitront à la lecture de la description qui va suivre donnée à titre non limitatif et grâce aux figures annexées parmi lesquelles :

La figure 1 est une représentation schématique d'une antenne réseaux active multifaisceaux selon l'invention ;
La figure 2 est une représentation schématique d'une matrice d'éléments rayonnants de l'antenne multifaisceaux de la figure 1, dans lequel des sous-réseaux associés à des éléments rayonnants sont organisés selon un premier mode de réalisation ;
La figure 3 est une représentation schématique des éléments rayonnants appartenant à un premier sous-réseau des sous-réseaux de la figure 2 ;
La figure 4 est une représentation schématique des éléments rayonnants appartenant à un second sous-réseau des sous-réseaux de la figure 2 ;
La figure 5 est une représentation schématique d'une matrice d'éléments rayonnants de l'antenne multifaisceaux de la figure 1, dans lequel des sous-réseaux associés à des éléments rayonnants sont organisés selon un second mode de réalisation ;
La figure 6 illustre une connexion de cinq sous-réseaux organisés selon le second mode de réalisation de la figure 5 ;
La figure 7 illustre un commutateur pour la connexion d'un sous-réseau de la figure 6 ;
La figure 8 est une représentation schématique d'au moins un faisceau régional ainsi que plusieurs faisceaux directifs selon l'invention ;
La figure 9 illustre des pertes de dépointage obtenues pour plusieurs types de formations de faisceaux pour une antenne de 400 éléments rayonnants ;
La figure 10 illustre des diagrammes de rayonnement pour des faisceaux directifs obtenus par une formation de faisceau hybride et une formation de faisceaux hybride avec entrelacement ;
La figure 11 illustre une application d'une loi d'amplitude uniforme à chaque sous-réseau ;
La figure 12 illustre une application d'une loi d'amplitude apodisée à chaque sous-réseau ;
La figure 13 illustre une application de la formation de faisceaux hybride à une solution d'accès multiple dans le temps ;
La figure 14 illustre la formation de faisceaux analogique reconfigurable selon l'art antérieur ;
La figure 15 illustre un formateur de faisceau analogique reconfigurable avec sélection de faisceaux parmi une grille bidimensionnelle préformée selon l'art antérieur ;
La figure 16 illustre d'un formateur de faisceaux analogique associant formateurs de faisceaux quasi-optiques et formation de faisceaux analogiques reconfigurables selon l'art antérieur ;
La figure 17 illustre une application de la formation de faisceaux hybride à une solution d'accès multiple en fréquence ;
La figure 18 illustre un formateur de faisceaux quasi-optique à deux dimensions selon l'art antérieur.

**Description détaillée des dessins**

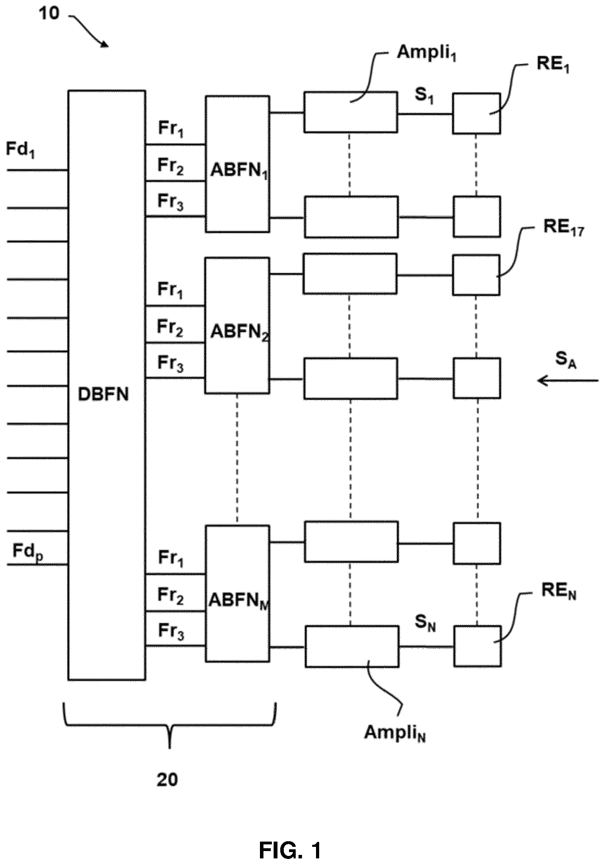

La figure 1 est une représentation schématique d'une antenne réseau active multifaisceaux 10 selon l'invention.

Cette antenne réseau active multifaisceaux 10 comprend :

- une pluralité d'éléments rayonnants $RE_1$-$RE_N$ ;
- une pluralité d'amplificateurs $Ampli_1$-$Ampli_N$ ;
- un dispositif hybride 20.

Chaque élément rayonnant $RE_1$-$RE_N$ est adapté pour recevoir et traiter des signaux de communication $S_A$ et pour fournir des signaux de sortie $S_1$-$S_N$ résultants. Ces signaux de communication $S_A$ sont, par exemple, conformes à une loi uniforme. En variante, les signaux de communication $S_A$ sont conformes à une loi apodisée. Par « loi apodisée », on entend une loi de type créneau présentant un état haut et un état bas et dont le passage à l'état haut se fait progressivement.

Chaque amplificateur $Ampli_1$-$Ampli_N$ est adapté pour recevoir un signal de sortie $S_1$-$S_N$ provenant des éléments rayonnant $RE_1$-$RE_N$ et pour l'amplifier.

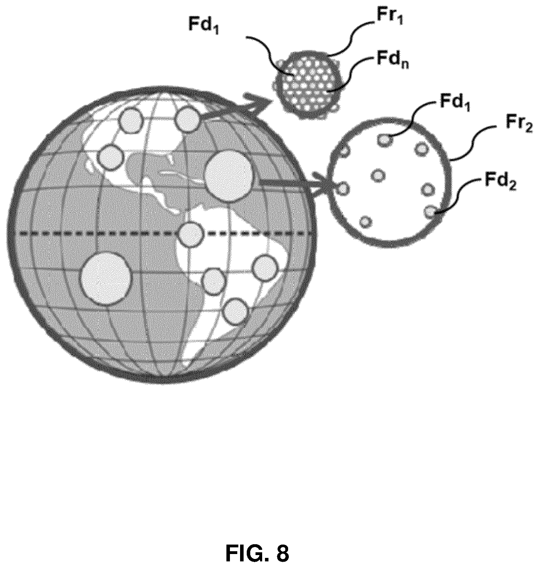

Le dispositif hybride 20 est adapté pour former des faisceaux directifs $Fd_1$-$Fd_M$. Ce dispositif hybride 20 comprend un étage analogique ABFN (pour « Analogie Beamforming Network » en anglais) et un étage numérique DBFN (pour « Digital Beamforming Network », en anglais). L'étage analogique ABFN est adapté pour former des faisceaux régionaux $Fr_1$, $Fr_2$, $Fr_3$. L'étage numérique DBFN est adapté pour former les faisceaux directifs $Fd_1$-$Fd_p$ à partir des faisceaux régionaux $Fr_1$, $Fr_2$, $Fr_3$. Les faisceaux directifs formés $Fd_1$-$Fd_p$ sont contenus à l'intérieur des faisceaux régionaux $Fr_1$, $Fr_2$, $Fr_3$. De tels faisceaux directifs et faisceaux régionaux sont illustrés plus spécifiquement à la figure 8. Sur cette figure 8, l'antenne réseau active multifaisceaux 10 est adaptée pour cibler différentes zones du globe par des faisceaux régionaux $Fr_1$, $Fr_2$. Chaque faisceau régional comprend une pluralité de faisceaux directifs. Le nombre de faisceaux directifs dans chaque faisceau régional peut être différent. Ainsi, un premier faisceau régional $Fr_1$ comprend un grand nombre de faisceaux directifs. Un second faisceau régional $Fr_2$ comprend un nombre de faisceaux directifs limité. Les faisceaux régionaux $Fr_1$, $Fr_2$ présentent ici des largeurs différentes. De la même manière, les faisceaux directifs peuvent présenter différentes largeurs.

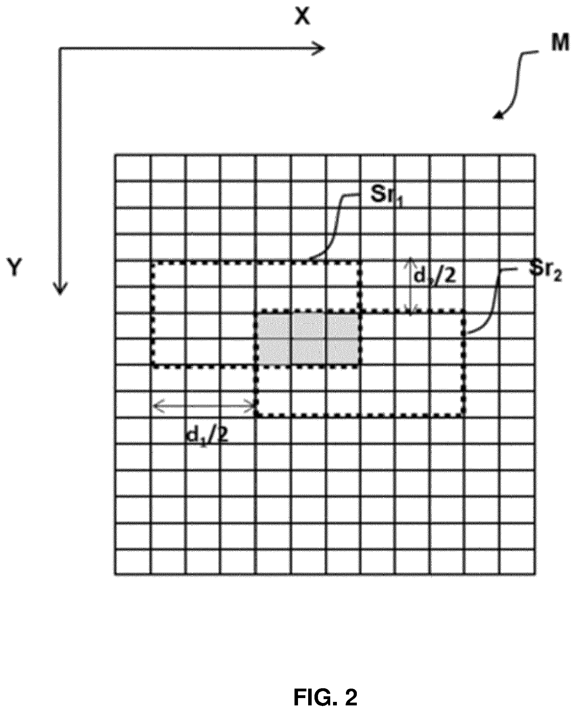

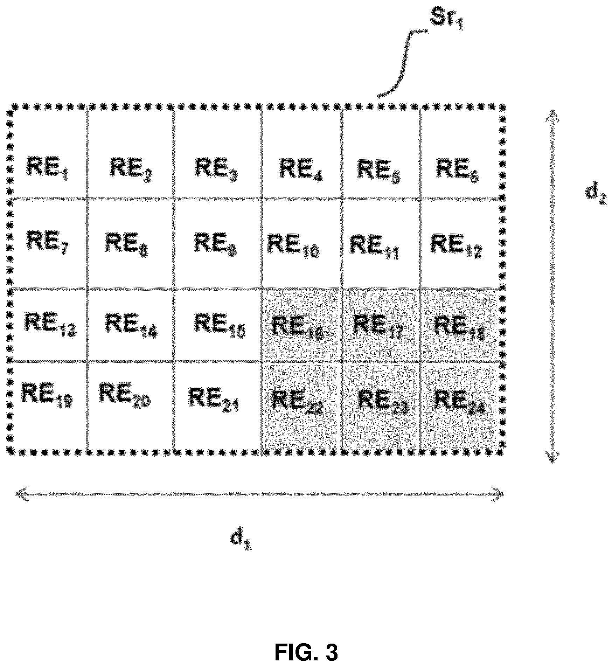

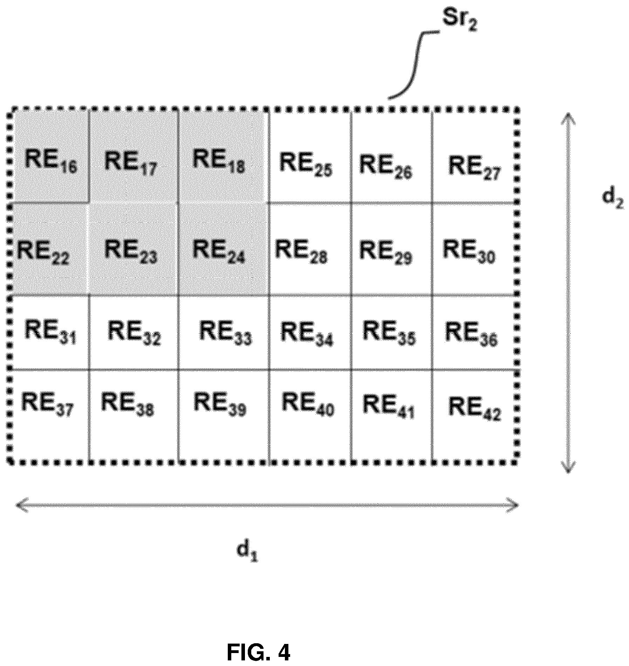

L'étage analogique ABFN est divisé en une pluralité de formateur analogique de faisceaux $ABFN_1$-$ABFN_M$. Chaque formateur analogique de faisceaux $ABFN_1$-$ABFN_M$ est associé à un sous-réseau regroupant plusieurs éléments rayonnants. De tels sous réseaux sont notamment divulgués aux figures 2, 3 et 4. Sur la figure 2, les éléments rayonnants représentés sous la forme de carrés forment une matrice M. Cette matrice s'étend selon une première direction X et selon une seconde direction Y perpendiculaire à la première direction X. Plus particulièrement, un premier ensemble d'éléments rayonnants forme un premier sous-réseau $Sr_1$ d'éléments rayonnants et un second ensemble d'éléments rayonnants forme un second sous-réseau $Sr_2$ d'éléments rayonnants. Le premier sous-réseau $Sr_1$ est plus particulièrement illustré à la figure 3 et il comprend dans cette figure 24 éléments rayonnants $RE_1$-$RE_{24}$. Ce premier sous-réseau $Sr_1$ a une forme globalement rectangulaire présentant une dimension $d_1$ selon la première direction X et une dimension $d_2$ selon la seconde direction Y. Ce premier sous-réseau $Sr_1$ appartient à un premier groupe de sous-réseaux $Gr_1$. Le second sous-réseau $Sr_2$ est illustré à la figure 4. Il comprend également 24 éléments rayonnants $RE_{16}$-$RE_{18}$, $RE_{22}$-$RE_{24}$, $RE_{25}$-$RE_{42}$. Le second sous-réseau $Sr_2$ a une forme rectangulaire présentant une dimension $d_1$ selon la première direction X et une dimension $d_2$ selon la seconde direction Y. Ce second sous-réseau $Sr_2$ appartient à un second groupe de sous-réseaux $Gr_2$. Comme il est illustré à la figure 2, le second sous-réseau $Sr_2$ chevauche partiellement le premier sous-réseau $Sr_1$ de sorte que les éléments rayonnants $RE_{16}$, $RE_{17}$, $RE_{18}$, $RE_{22}$, $RE_{23}$, $RE_{24}$ sont communs au premier sous-réseau $Sr_1$ et au second sous-réseau $Sr_2$. Ces éléments rayonnants communs sont plus particulièrement grisés sur les figures 2-3. En outre, le second sous-réseau $Sr_2$ d'éléments rayonnants est décalé par rapport au premier sous-réseau $Sr_1$ selon la première direction X de la matrice M d'un premier décalage correspondant à moitié de la première dimension $d_1$ de la forme rectangulaire et selon la seconde direction Y d'un second décalage correspondant à la moitié de la seconde dimension $d_2$ de cette forme rectangulaire.

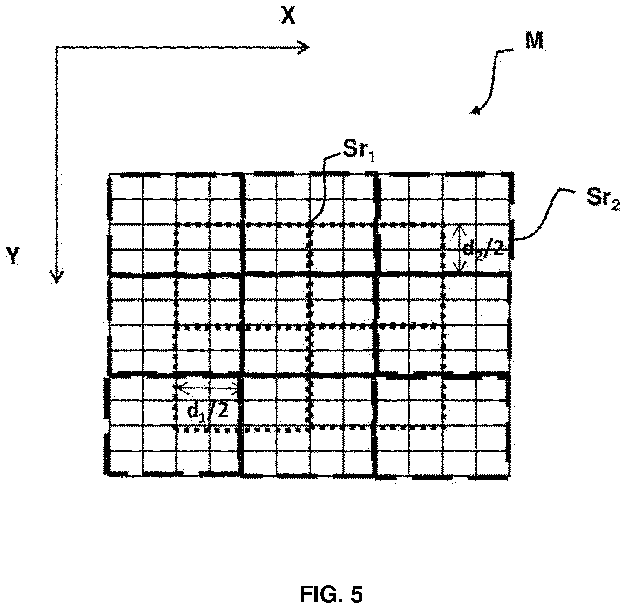

La figure 5 décrit un arrangement de plusieurs premiers sous-réseaux $Sr_1$ et de plusieurs seconds sous réseaux $Sr_2$, les premiers sous-réseaux $Sr_1$ (délimités par des points sur la figure) et les seconds sous-réseaux $Sr_2$ (délimités par des traits interrompus sur la figure) ont une forme carrée, chaque sous-réseau comprenant 16 éléments rayonnants. Les seconds sous-réseaux $Sr_2$ sont alors décalés par rapport aux premiers sous-réseaux $Sr_1$ selon la direction X et selon la direction Y d'un même décalage correspondant à la moitié d'un côté de la forme carrée.

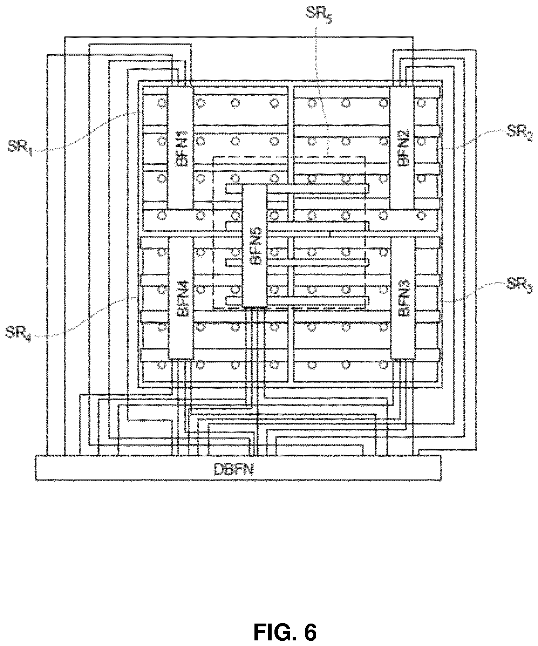

La figure 6 illustre cinq sous-réseaux $Sr_1$-$Sr_5$ dont l'un appartient au second groupe de sous-réseaux. Le premier sous-réseau $Sr_1$, le second sous-réseau $Sr_2$, le troisième sous-réseau $Sr_3$ et le quatrième sous-réseau $Sr_4$ sont positionnés les uns à côtés des autres. Le cinquième sous-réseau $Sr_5$ est superposé aux quatre autres sous-réseaux $Sr_1$-$Sr_4$ et partage des éléments rayonnants avec ces autres sous-réseaux. Ainsi le cinquième sous-réseau $Sr_5$ partage quatre éléments rayonnants avec le premier sous-réseau $Sr_1$, quatre éléments rayonnants avec le second sous-réseau $Sr_2$, quatre éléments rayonnants avec le troisième sous-réseau $Sr_3$ et quatre éléments rayonnants avec le quatrième sous-réseau $Sr_4$. Les sous-réseaux $Sr_1$-$Sr_5$ sont dit alors entrelacés.

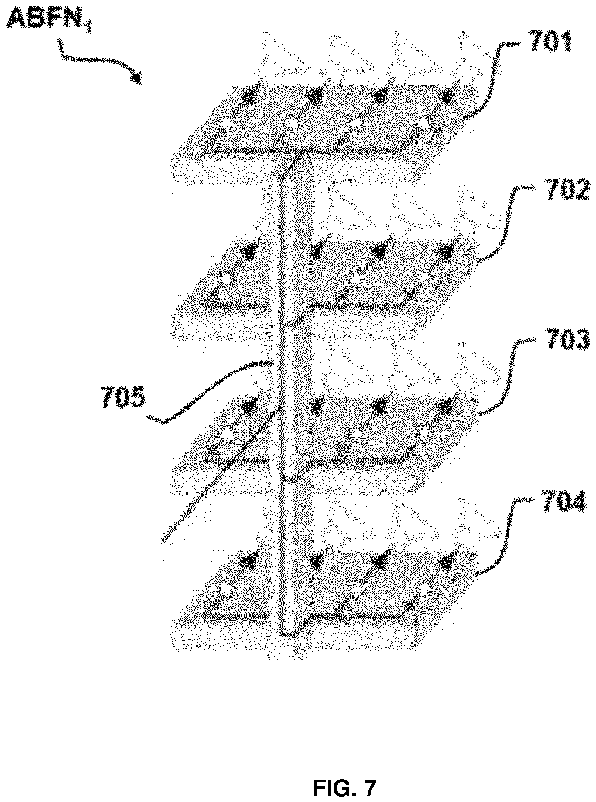

A l'intérieur de chaque sous-réseau $Sr_1$, $Sr_2$ les différents ports des éléments rayonnants sont reliés par un des formateurs analogiques de faisceaux $ABFN_1$-$ABFN_M$. Chaque formateur est réparti en plateaux et en tronc commun. La description détaillée de l'ABFN, associé au premier sous-réseau Sr$_1$ est fournie dans la figure 7. Les éléments rayonnants du centre sont connectés à deux formateurs ABFN différents.

La figure 7 représente l'implémentation du formateur analogique de faisceau ABFN, en plateaux 701-704 associés à un tronc commun 705. Par simplicité, on a traité le cas d'un seul faisceau régional, mais cette implémentation peut être adaptée pour accommoder plusieurs faisceaux régionaux. Sur chaque plateau 701-704, il y a une division au niveau des éléments rayonnants en autant de fois qu'il y a de faisceaux. Pour chaque faisceau, sont appliqués des coefficients de déphasage et d'atténuation et une sommation partielle. Sur le tronc commun 705, est appliquée une sommation complémentaire pour les différents faisceaux. Les puces RF déphaseurs et atténuateurs sont disposées dans les plateaux. La sommation des signaux est réalisée partiellement dans chaque plateau (pour quatre éléments rayonnants) et dans le tronc commun pour le complément (et les 16 éléments rayonnants du sous-réseau). Pour plus de lisibilité, les connections avec l'étage numérique DBFN n'ont pas été représentées dans cette figure 7.

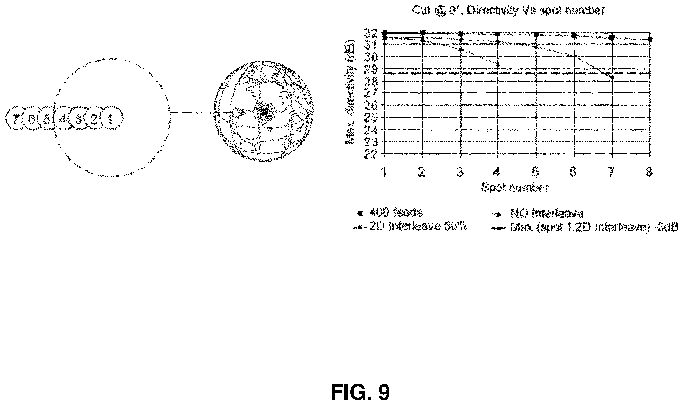

L'intérêt de la formation du faisceau hybride entrelacée est démontré sur le cas d'une antenne réseau comportant 400 éléments rayonnants de taille 0,6 λ, λ étant la longueur d'onde, pour réaliser des faisceaux sur la terre à partir d'un satellite en orbite LEO. L'antenne de référence se décompose en 25 sous-réseaux de 16 éléments rayonnants. On identifie un second regroupement de 16 sous-réseaux, utilisant les mêmes éléments rayonnants que les premiers sous-réseaux, et décalés d'une demi-période par rapport au premier groupe de sous-réseaux. On considère le cas d'un faisceau régional pointé au centre de la terre, et de faisceaux directifs pointés dans différentes directions, à l'intérieur puis à l'extérieur de ce faisceau régional. On compare la formation de faisceaux à partir du premier regroupement de sous-réseaux (antenne de référence), et également à partir des deux regroupements de sous-réseaux. Il apparaît que lorsqu'on dépointe le faisceau directif à l'intérieur du faisceau régional, les pertes de dépointage sont bien inférieures à celles observées pour l'antenne constituée par le seul premier groupe de sous-réseaux. Cette antenne de référence se caractérisait par des pertes de dépointage à -3 dB obtenues pour un faisceau directif pointant en bord du faisceau régional. Elles sont dues à l'apparition de lobes de réseau. Ces mêmes pertes de dépointage sont obtenues pour le cas de la formation hybride entrelacée pour un faisceau directif pointant dans une direction angulaire deux fois plus importante. La figure 9 illustre des pertes de dépointage obtenues pour plusieurs types de formations de faisceaux pour une antenne de 400 éléments rayonnants : formation de faisceaux numérique sur les 400 éléments rayonnants (tracé reliant des carrés), formation de faisceaux hybride sur les 25 sous-réseaux contigus (tracé reliant des triangles), formation de faisceaux hybride entrelacée sur les 25 sous-réseaux contigus et les 16 sous-réseaux contigus superposés (tracé reliant des losanges).

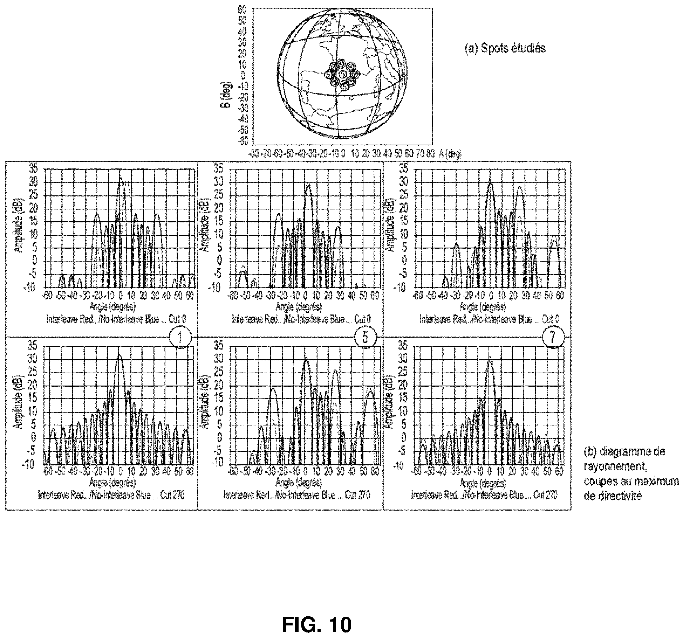

La formation de faisceaux entrelacée est également intéressante d'un point de vue qualité du diagramme de rayonnement comme il est illustré à la figure 10. Cette formation de faisceaux entrelacée permet de supprimer les lobes de réseau. Elle permet également de limiter le niveau des lobes secondaires en comparaison du cas sans entrelacement. Pour l'antenne de référence, des pertes de dépointage de 3 dB sont observées lorsque le faisceau directif pointe en bord de faisceau régional, c'est-à-dire à une distance égale à trois largeurs de faisceaux directifs du faisceau directif central. Pour l'antenne avec la formation de faisceaux entrelacée, ces mêmes pertes sont obtenues pour une distance égale à six largeurs de faisceaux directifs du faisceau directif central.

Il en résulte que le secteur angulaire sur lequel un faisceau directif peut être pointé est deux fois plus important que celui obtenu avec l'antenne de référence. Le nombre de faisceaux directifs qui peut être réalisés est donc quatre fois supérieur.

Le nombre d'interfaces de conversion numérique analogique et de circuits de conversion de fréquence requis par la formation de faisceau hybride entrelacée a été augmenté uniquement d'un facteur 41/25 (inférieur à 2).

La formation de faisceau entrelacée lorsque les sous-réseaux sont superposés et décalés d'une demi-période est alors très intéressante, car elle permet d'augmenter le nombre de faisceaux directifs d'un facteur 4 alors que la complexité des interfaces de numérisation n'a augmenté que d'un facteur inférieur à 2.

Cette normalisation avec le nombre d'interfaces de numérisation est intéressante car le nombre de faisceaux directifs qu'il est possible de réaliser à l'intérieur d'un faisceau régional varie linéairement avec le nombre de sous-réseaux contribuant à l'étage numérique de la formation de faisceaux hybride. Une formation de faisceaux hybride entrelacée est donc une technique plus efficace que l'accroissement de l'antenne réseau.

Il faut noter que si le second groupe de sous-réseaux n'est décalé d'une demi-période que selon un axe, le nombre de faisceaux directifs qu'il est possible de réaliser n'augmente que dans la direction de l'entrelacement. Il est alors égal au premier ordre à 2, soit approximativement le facteur d'accroissement de complexité de la formation de faisceaux hybride. Le véritable intérêt est atteint en décalant le second groupe de sous-réseaux d'une demi-période dans les deux directions.

Le nombre de faisceaux directifs peut encore être accru en maitrisant la loi d'alimentation des sous-réseaux. Elle permet notamment de maîtriser également les lobes secondaires des faisceaux régionaux, et ainsi d'éviter toute interférence entre signaux appartenant à deux faisceaux régionaux distincts.

En effet, le fondement théorique de l'invention est l'annulation du premier lobe de réseau.

Le facteur de réseau d'une antenne réseau pour laquelle les éléments rayonnants sont alimentés avec une amplitude uniforme s'écrit :

$$F(u) = \exp(j\pi(N-1)u]\frac{\sin\left(\frac{1}{2}Nk\right)du}{N\sin\left(\frac{1}{2}k\right)du} \quad (1)$$

Où d est la taille d'un sous-réseau, k = $2\pi/\lambda$, u = $\sin(\theta)$ - $\sin(\theta_0)$, et N correspondant au nombre d'éléments rayonnants

Une progression du coefficient de phase appliqué à deux sous-réseaux contigus est égale à kd $\sin(\theta_0)$. Elle permet aux différents sous-réseaux d'être cohérents dans la direction $\theta_0$.

Il est aussi bien connu que les antennes réseaux sont régies par l'équation des grating lobes, qui décrit les conditions d'excitation de n lobes de réseau et leur séparation par rapport à la direction de pointage du faisceau principal :

$$\sin(\theta_{GL}) - \sin(\theta_0) = n\frac{\lambda}{d} \quad (2)$$

Aussi, pour permettre aux deux regroupements de sous-réseaux décalés d'une demi-période d/2 d'être cohérents dans la direction $\theta_0$, il faut ajouter une phase de k(d/2) sin ($\theta_0$) à la loi de phase du deuxième regroupement de sous-réseau.

En appliquant l'équation (2), cette progression de phase entre les deux regroupements devient :

$$k\frac{d}{2}\sin(\theta_{GL}) - n\pi \quad (3)$$

Or k(d/2) sin ($\theta_{GL}$) correspond à la phase associée à la différence de trajet d'une onde incidente dans la direction $\theta_{GL}$ entre deux sous-réseaux distants de d/2.

Ceci signifie que dans la direction du nième lobe de réseau, les contributions des deux regroupements s'ajoutent avec la pondération exp (jn$\pi$). Les lobes de réseau d'ordre impairs générés par les deux regroupements s'annulent, alors que les lobes de réseau d'ordre pairs se somment.

L'entrelacement permet donc d'annuler le premier lobe de réseau, et permet donc d'augmenter le dépointage $\theta_0$ d'un facteur 2.

En réalisant cet entrelacement dans les deux directions, il est ainsi possible de réaliser quatre fois plus de faisceaux pour une augmentation d'un facteur 2 uniquement de la complexité de la formation de faisceaux.

Un autre fondement théorique de l'invention est la maîtrise du second lobe de réseau. En effet, après avoir annulé le premier lobe de réseau et plus généralement les lobes de réseaux d'ordre impair, nous allons maintenant rechercher les conditions pour lesquelles il est possible d'atténuer le second lobe de réseau, ou plus généralement les lobes de réseau d'ordre pair.

Le diagramme de rayonnement de chaque regroupement de sous-réseaux s'exprime en effet comme le produit entre le facteur de réseau et le diagramme de rayonnement d'un sous-réseau. Lorsque le faisceau directif est dirigé en limite du faisceau régional, le second lobe de réseau apparait dans les lobes secondaires du diagramme de rayonnement du sous-réseau.

En appliquant, une loi d'amplitude sur le sous-réseau qui produise des lobes secondaires faibles, comme une loi d'amplitude apodisée, ou une loi de Taylor, il est alors possible de réduire l'effet de ce second lobe de réseau. Ce qui permet d'accroître encore le secteur angulaire sur lequel le faisceau directif est formé.

Ce second lobe de réseau deviendra alors gênant pour des dépointages accrus du faisceau principal, qui fera coïncider ce second lobe de réseau et le faisceau régional correspondant du diagramme de rayonnement du sous-réseau.

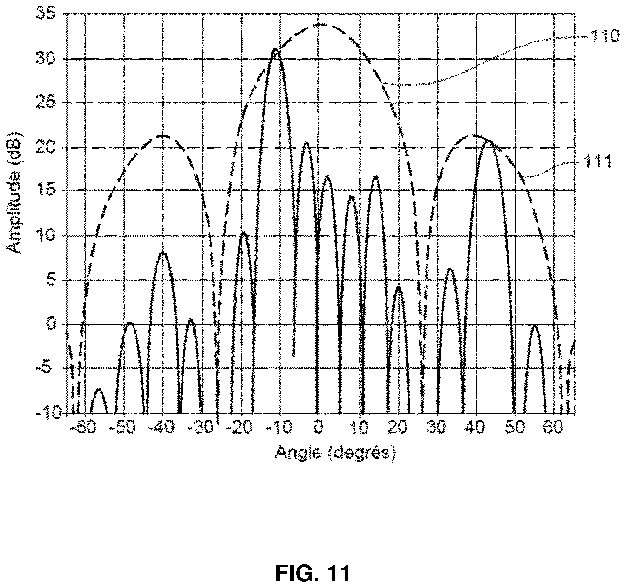

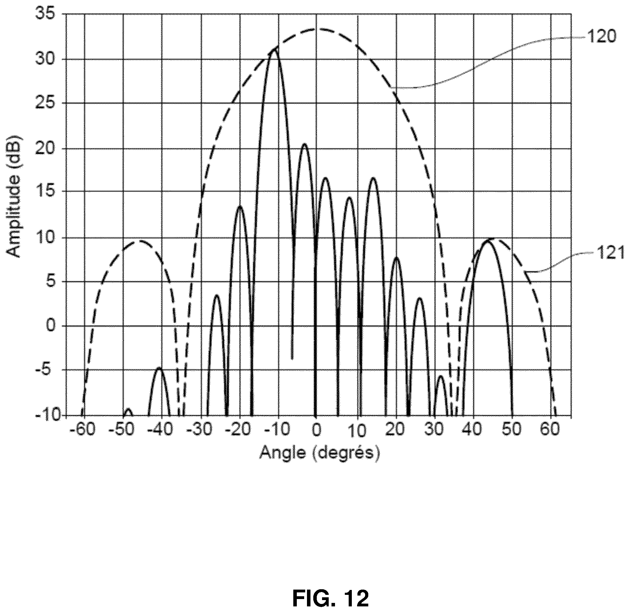

Pour illustrer ce point, la figure 11 est une coupe dans l'axe est-ouest d'un faisceau obtenu par une architecture antennes avec sous-réseaux entrelacés (regroupement de sous-réseaux décalés d'une demi-période) et du diagramme de rayonnement d'un sous-réseau, avec une amplitude uniforme du sous-réseau. Le premier lobe de réseau (110) a été filtré par le principe évoqué ci-dessus. Le second lobe de réseau (111) ainsi que tous les lobes de réseau d'ordre pair du facteur de réseau correspondent à des directions correspondants aux lobes secondaires des diagrammes de rayonnement des sous-réseaux (également faisceaux régionaux). Ces lobes de réseaux sont donc atténués par l'atténuation du filtrage spatial réalisé par le faisceau régional. C'est la raison pour laquelle ce faisceau régional a été superposé au diagramme des faisceaux directifs. La figure 12 est une coupe dans l'axe est-ouest d'un faisceau obtenu par une architecture antennes avec sous-réseaux entrelacés (regroupement de sous-réseaux décalés d'une demi-période) et du diagramme de rayonnement d'un sous-réseau, avec une amplitude apodisée du sous-réseau. Le faisceau régional d'un sous-réseau avec une loi d'alimentation apodisée est caractérisé par des lobes secondaires (121) plus bas, et donc par un plus fort filtrage spatial en dehors du lobe principal (120). Les lobes de réseau pairs sont donc minimisés.

Cette propriété intéressante peut également s'interpréter en considérant la loi d'amplitude et de phase équivalente résultant de la somme des deux lois de distribution de phases réalisées sur les deux regroupements de sous-réseaux.

Considérons dans le cas d'un faisceau régional pointant au Nadir, et le cas d'un faisceau directif orienté dans une direction choisie à l'intérieur de ce faisceau régional, réalisé par une pondération de phase réalisé par l'étage numérique du formateur de faisceau hybride.

La loi de phase équivalente obtenue sur le réseau indique une progression par paliers pour chacun des deux regroupements de sous-réseaux.

Dans le cas de la figure 11, une loi d'amplitude uniforme est appliquée à chaque sous-réseau. La loi d'amplitude équivalente résultant de la sommation de deux lois d'alimentation des sous-réseaux entrelacés est alors uniforme, et la loi de phase indique sur l'ouverture rayonnante une progression par paliers, qui sont en surface quatre fois plus petits que pour la loi de phase d'un seul regroupement de sous-réseaux.

Dans le cas de la figure 12, une loi d'amplitude apodisée est appliquée à chaque sous-réseau. Comme les sous-réseaux sont décalés d'une demi-période, l'amplitude maximale obtenue sur les sous-réseaux du premier regroupement correspond à l'amplitude minimum obtenue sur les sous-réseaux du second regroupement. L'amplitude résultant de la sommation est alors approximativement constante. La loi de phase résultant de la sommation des deux lois d'alimentation des sous-réseaux entrelacés indique maintenant une progression plus continue, plus proche de la progression continue de la phase idéale qu'il faudrait réaliser pour orienter le faisceau directif dans la direction souhaitée. Il en résulte donc une moindre erreur de phase entre la loi équivalente réalisée et la loi idéale, résultant en une moindre excitation du second lobe de réseaux.

La formation hybride entrelacée peut être illustrée pour deux solutions différentes d'accès multiples, dans le temps et en fréquence.

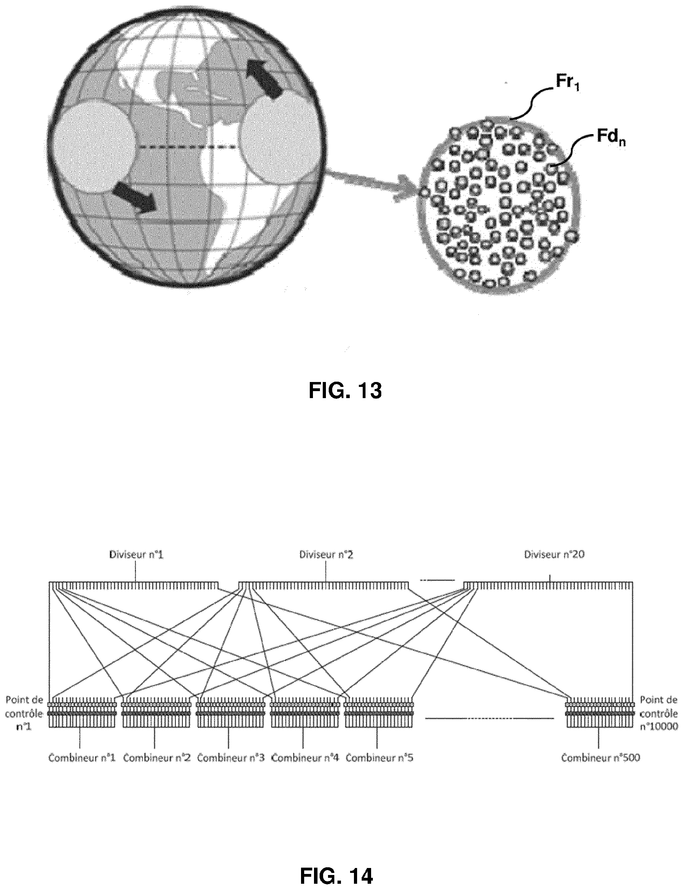

Dans le cas d'un accès multiple dans le temps (TDMA), il est possible d'affecter séquentiellement un même accès faisceau régional à différentes directions, comme il est illustré à la figure 13. Le formateur de faisceau analogique est alors reconfigurable à chaque intervalle de temps. Il peut s'agir d'un formateur de faisceau comme il est illustré à la figure 14. Sur cette figure, le formateur de faisceau analogique opère sur les signaux radiofréquence. Il effectue des opérations de division, déphasage atténuation et combinaison. Son implémentation est difficile lorsque le nombre d'éléments rayonnants et de faisceaux est élevé. Ainsi à titre d'exemple, la génération de 20 faisceaux à partir de 500 éléments rayonnants conduit à devoir implémenter dans le formateur de faisceaux analogique 20 diviseurs 1 vers 500, 10 000 points de contrôles amplitude/phase et 500 combineurs 20 vers 1. Il est précisé que chaque point de contrôle amplitude/phase intègre des déphaseurs ou lignes de retard variables et peut également intégrer des atténuateurs ou amplificateurs variables. L'implémentation physique de ces éléments se heurte non seulement à leur grand nombre mais également à la complexité des routages à effectuer entre ces différents éléments et à la difficulté de maîtriser les dispersions de phase de cette multitude de chemins radiofréquences. Ceci est d'autant plus vrai que la fréquence de fonctionnement est élevée.

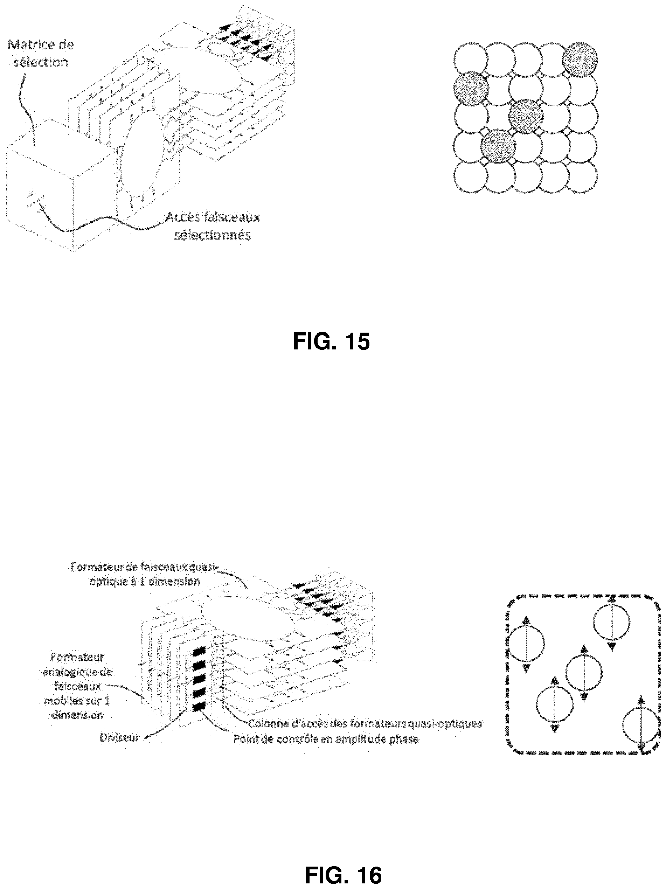

En variante, il peut s'agir d'un formateur de faisceau analogique reconfigurable avec sélection de faisceaux parmi une grille bidimensionnelle préformée. Un tel formateur est illustré à la figure 15. Ce formateur de faisceau reconfigurable est obtenu en couplant une matrice de sélection avec un formateur de faisceaux quasi-optiques, tels que des lentilles de Rotman ou des lentilles à retard continu, pour réaliser simultanément plusieurs faisceaux à partir d'un réseau linéaire d'éléments rayonnants.

En variante, il peut s'agir d'un formateur de faisceaux analogique de complexité réduite, associant formateurs de faisceaux quasi-optiques et formation de faisceaux analogiques reconfigurables. Un tel formateur est illustré à la figure 16. Ce formateur correspond à un couplage des formateurs de faisceaux quasi-optiques avec des formateurs de faisceaux analogiques reconfigurables afin de réaliser un formateur analogique multifaisceaux bidimensionnel. Un tel formateur de faisceau réalise des faisceaux multiples reconfigurable selon un axe.

L'accès TDMA est particulièrement avantageux d'un point de vue matériel, car il permet de réduire le nombre d'accès faisceaux de l'antenne. Il résulte également en des réductions de puissance consommée liée à la numérisation.

Cette technique permet de pointer les faisceaux régionaux de sorte à s'adapter à la répartition spatiale du trafic. Le pointage est ajusté pour couvrir à chaque intervalle de temps un trafic identique.

Dans le cas d'une formation de faisceaux hybride sans entrelacement, représentée par la figure 1, on évite de réaliser sur le même intervalle de temps des faisceaux régionaux adjacents, afin de se prémunir de l'émergence de lobes de réseaux parasites et donc d'interférences résultant de l'affectation d'une même ressource temporelle à un utilisateur situé dans le lobe parasite du faisceau directif réalisé en direction de l'utilisateur principal. Dans le cas de la formation de faisceaux hybride entrelacée, la perturbation par des lobes réseaux n'est plus une menace.

Grâce à la formation de faisceaux hybride entrelacée, il devient possible d'accroître le nombre de faisceaux directifs par faisceau régional d'un facteur 4, pour une augmentation de la puissance consommée par la numérisation accrue uniquement d'un facteur 2. Il est également possible de réaliser des faisceaux régionaux adjacents et d'accroitre ainsi le nombre de faisceaux partageant une même ressource temporelle qu'il est possible de produire avec une antenne réseau.

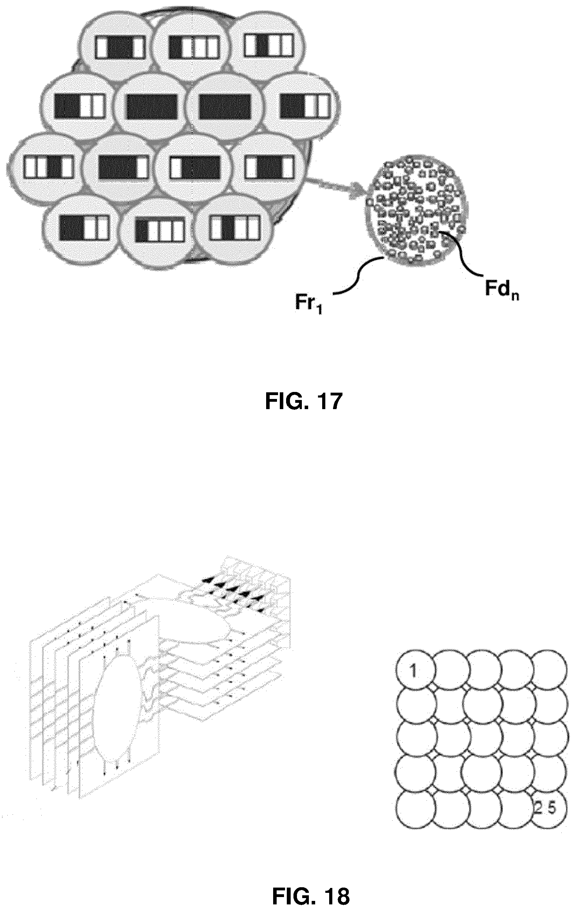

Dans le cas d'un accès multiple en fréquence (FDMA), il est nécessaire de couvrir la zone géographique d'intérêt par une grille de faisceaux régionaux, comme il est illustré à la figure 17. Chaque sous-réseau doit alors être associé à un formateur de faisceau analogique, fixe ou reconfigurable, réalisant cette couverture multifaisceaux.

Cette contrainte limite le nombre de faisceaux régionaux qu'il est possible de réaliser.

Un formateur de faisceau quasi-optique bidimensionnel, tel qu'illustré à la figure 18, est une solution intéressante de moindre complexité dans le cas d'un formateur de faisceaux fixe.

Il est alors possible d'affecter des sous bandes de fréquence aux accès faisceaux régionaux. La largeur de ces bandes de fréquences dépend du trafic sur la zone couverte par chaque faisceau régional. Plus un trafic important est requis, plus les bandes de fréquences allouées sont importantes. Cette formation hybride associée à cette canalisation permet aussi de réduire la puissance consommée liée à la numérisation pour chaque accès faisceau d'un rapport qui est proportionnel à la bande relative (sous-bande / bande totale) affecté au faisceau

Dans le cas d'une formation de faisceaux hybride simple, tel que représenté à la figure 1, on évite d'affecter des mêmes bandes de fréquences à des faisceaux régionaux adjacents, afin de se prémunir de l'émergence de lobes de réseaux parasites discutés ci-après, et donc d'interférences résultant de l'affectation d'une même ressource fréquentielle à un utilisateur situé dans le lobe parasite du faisceau directif réalisé en direction de l'utilisateur principal. Dans le cas de la formation de faisceaux hybride entrelacée, la perturbation par des lobes de réseaux n'est plus une menace.

Grâce à la formation de faisceaux hybrides entrelacée, il devient possible d'accroitre le nombre de faisceaux directifs par faisceau régional d'un facteur 4, pour une augmentation de la puissance consommée par la numérisation accrue uniquement d'un facteur 2. Il devient également possible d'allouer les mêmes bandes de fréquences à deux faisceaux régionaux adjacents, augmentant ainsi le taux de réutilisation de fréquences, et donc le débit associé à une antenne réseau.

Enfin, on notera que chaque élément rayonnant contribue au maximum à deux formateurs de faisceaux analogiques. Ce qui permet de limiter la complexité de l'antenne active.

**Revendications**

1. Antenne réseau active multifaisceaux adaptée pour recevoir des signaux de communication ($S_A$), ladite antenne réseau active multifaisceaux (10) comprenant :

   - des éléments rayonnants ($RE_1$-$RE_N$), chaque élément rayonnant étant apte à fournir des signaux de sortie ($S_1$-$S_N$) à partir des signaux de communication ($S_A$), lesdits éléments rayonnants ($RE_1$-$RE_N$) étant arrangés dans une matrice (M) d'éléments rayonnants ($RE_1$-$RE_N$), ladite matrice s'étendant selon une première direction (X) et selon une seconde direction (Y) perpendiculaire à la première direction (X) ;
   - un dispositif hybride (20) pour la formation de faisceaux directifs ($Fd_1$-$Fd_p$), ledit dispositif hybride (20) comprenant :

      - un étage analogique divisé en une pluralité de formateurs analogiques de faisceaux ($ABFN_1$-$ABFN_M$) , chaque formateur analogique ($ABFN_1$-$ABFN_M$) étant associé à un sous-réseau ($Sr_1$-$Sr_N$) regroupant plusieurs éléments rayonnants ($RE_1$-$RE_N$) de la matrice (M) pour former des faisceaux régionaux ($Fr_1$, $Fr_2$, $Fr_3$) à partir des signaux de sortie ($S_1$-$S_N$) desdits éléments rayonnants ($RE_1$-$RE_N$), les sous-réseaux ($Sr_1$-$Sr_N$) formant des mêmes faisceaux régionaux ($Fr_1$, $Fr_2$, $Fr_3$),
      - un étage numérique (DBFN) adapté pour former les faisceaux directifs ($Fd_1$-$Fd_p$) à partir des faisceaux régionaux ($Fr_1$, $Fr_2$, $Fr_3$), lesdits faisceaux directifs ($Fd_1$-$Fd_p$) formés étant contenus à l'intérieur des faisceaux régionaux ($Fr_1$, $Fr_2$, $Fr_3$);

   un premier sous-réseau ($Sr_1$) est associé à des premiers éléments rayonnants ($RE_1$-$RE_{24}$) de la matrice (M), ledit premier sous-réseau ($Sr_1$) ayant une forme rectangulaire présentant une première dimension ($d_1$) selon la première direction (X) de la matrice (M) et une seconde dimension ($d_2$) selon la seconde direction (Y) de la matrice (M), un second sous-réseau ($Sr_2$) est associé à des seconds éléments rayonnants ($RE_{16}$-$RE_{18}$, $RE_{22}$-$RE_{42}$) de la matrice (M), le second sous-réseau ($Sr_2$) ayant les mêmes dimensions ($d_1$, $d_2$) que le premier sous-réseau ($Sr_1$), le second sous-réseau ($Sr_2$) chevauchant partiellement le premier sous-réseau ($Sr_1$) de sorte que des éléments rayonnants ($RE_{16}$, $RE_{17}$, $RE_{18}$, $RE_{22}$, $RE_{23}$, $RE_{24}$) sont communs audit premier sous-réseau ($Sr_1$) et audit second sous-réseau ($Sr_2$), ladite antenne multifaisceaux (10) étant **caractérisée en ce que** le second sous-réseau ($Sr_2$) est décalé par rapport au premier sous-réseau ($Sr_1$) selon la première direction (X) de la matrice d'un premier décalage correspondant à la moitié de la première dimension (d1) de la forme rectangulaire du premier sous-réseau ($Sr_1$) et le second sous-réseau ($Sr_2$) est décalé par rapport au premier sous-réseau ($Sr_1$) selon la seconde direction (Y) de la matrice (M) d'un second décalage correspondant à la moitié de la seconde dimension ($d_2$) de la forme rectangulaire.

2. Antenne réseau active multifaisceaux selon la revendication 1 dans lequel la première dimension ($d_1$) et la seconde dimension ($d_2$) du premier sous-réseau ($Sr_1$) sont identiques de sorte que le premier sous-réseau ($Sr_1$) et le second sous-réseau ($Sr_2$) ont une forme carrée.

3. Antenne réseau active multifaisceaux selon l'une quelconque des revendications 1 à 2, dans lequel les faisceaux directifs ont différentes largeurs.

**4.** Antenne réseau active multifaisceaux selon l'une quelconque des revendications 1 à 3, dans lequel l'étage analogique forme au moins deux faisceaux régionaux avec des largeurs différentes.

**5.** Antenne réseau active multifaisceaux selon l'une quelconque des revendications 1 à 4, dans lequel les signaux de communication ($S_A$) sont conformes à une loi uniforme ou à une loi apodisée.

**6.** Antenne réseau active multifaisceaux selon l'une quelconque des revendications 1 à 5, dans lequel l'étage analogique comprend un formateur quasi-optique.

**7.** Antenne réseau active multifaisceaux selon la revendication 6, **caractérisé en ce que** le formateur quasi-optique comprend des lentilles de Rotman ou des lentilles de retard continu.

**8.** Antenne réseau active multifaisceaux selon l'une quelconque des revendications 1 à 7, **caractérisé en ce que** ladite antenne est reconfigurable.

**9.** Antenne réseau active multifaisceaux selon la revendication 8, dans lequel l'étage analogique comprend un module d'accès multiple dans le temps adapté pour former au moins un faisceau régional reconfiguré, ledit faisceau régional reconfiguré se déplaçant au rythme d'une trame temporelle.

**10.** Antenne réseau active multifaisceaux selon l'une quelconque des revendications 1 à 9, **caractérisé en ce que** l'étage analogique comprend un module d'accès multiple en fréquence adapté pour former plusieurs faisceaux régionaux contigus associés à des sous-bandes de largeur variable.

**11.** Antenne réseau active multifaisceaux selon l'une quelconque des revendications 1 à 10, dans lequel le premier sous-réseau appartient à un premier groupe de sous-réseaux et le second sous-réseau appartient à un second groupe de sous-réseaux.

**12.** Antenne réseau active multifaisceaux selon la revendication 11, dans lequel le second groupe de sous-réseaux est décalé par rapport au premier groupe de sous-réseaux selon le premier décalage et selon le second décalage.

**13.** Satellite de communication comportant une antenne réseau active multifaisceaux (10) selon l'une quelconque des revendications 1 à 12.

**FIG. 1**

11

FIG. 2

FIG. 3

$Sr_2$

| $RE_{16}$ | $RE_{17}$ | $RE_{18}$ | $RE_{25}$ | $RE_{26}$ | $RE_{27}$ |
|-----------|-----------|-----------|-----------|-----------|-----------|
| $RE_{22}$ | $RE_{23}$ | $RE_{24}$ | $RE_{28}$ | $RE_{29}$ | $RE_{30}$ |
| $RE_{31}$ | $RE_{32}$ | $RE_{33}$ | $RE_{34}$ | $RE_{35}$ | $RE_{36}$ |
| $RE_{37}$ | $RE_{38}$ | $RE_{39}$ | $RE_{40}$ | $RE_{41}$ | $RE_{42}$ |

$d_2$

$d_1$

## FIG. 4

**FIG. 5**

FIG. 6

ABFN$_1$

FIG. 7

**FIG. 8**

**FIG. 9**

(a) Spots étudiés

(b) diagramme de rayonnement, coupes au maximum de directivité

**FIG. 10**

**FIG. 11**

**FIG. 12**

**FIG. 13**

**FIG. 14**

**FIG. 15**

**FIG. 16**

**FIG. 17**

**FIG. 18**

Europäisches
Patentamt

European
Patent Office

Office européen
des brevets

# RAPPORT DE RECHERCHE EUROPEENNE

Numéro de la demande

EP 22 20 8240

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2013/163705 A1 (STIRLAND SIMON JOHN [GB]) 27 juin 2013 (2013-06-27) <br> * alinéa [0002] – alinéa [0050] * <br> * figures 1-10 * <br> ----- | 1-13 | INV. <br> H04B7/06 <br> H01Q21/06 <br> H01Q21/00 |
| A | US 2020/411971 A1 (FRAYSSE JEAN-PHILIPPE [FR] ET AL) 31 décembre 2020 (2020-12-31) <br> * alinéa [0013] – alinéa [0023] * <br> * alinéa [0086] – alinéa [0157] * <br> * figures 1-22 * <br> ----- | 1-13 | |
| A | US 2007/001897 A1 (ALLAND STEPHEN W [US]) 4 janvier 2007 (2007-01-04) <br> * alinéa [0030] – alinéa [0053] * <br> * figures 2-5 * <br> ----- | 1-13 | |

**DOMAINES TECHNIQUES RECHERCHES (IPC)**

H04B
H01Q

Le présent rapport a été établi pour toutes les revendications

| Lieu de la recherche | Date d'achèvement de la recherche | Examinateur |
|---|---|---|
| Munich | 31 mars 2023 | Kokkinos, Titos |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.........................................................................................................
& : membre de la même famille, document correspondant

EPO FORM 1503 03.82 (P04C02)

**EP 4 184 801 A1**

## ANNEXE AU RAPPORT DE RECHERCHE EUROPEENNE
## RELATIF A LA DEMANDE DE BREVET EUROPEEN NO.

EP 22 20 8240

31-03-2023

| Document brevet cité au rapport de recherche | | Date de publication | Membre(s) de la famille de brevet(s) | | Date de publication |
|---|---|---|---|---|---|
| US 2013163705 | A1 | 27-06-2013 | CA | 2803201 A1 | 29-12-2011 |
| | | | EP | 2403067 A1 | 04-01-2012 |
| | | | EP | 2586097 A1 | 01-05-2013 |
| | | | ES | 2646668 T3 | 14-12-2017 |
| | | | JP | 5916238 B2 | 11-05-2016 |
| | | | JP | 2013529870 A | 22-07-2013 |
| | | | US | 2013163705 A1 | 27-06-2013 |
| | | | WO | 2011161198 A1 | 29-12-2011 |
| US 2020411971 | A1 | 31-12-2020 | EP | 3758146 A1 | 30-12-2020 |
| | | | FR | 3098024 A1 | 01-01-2021 |
| | | | US | 2020411971 A1 | 31-12-2020 |
| US 2007001897 | A1 | 04-01-2007 | EP | 1742081 A2 | 10-01-2007 |
| | | | US | 2007001897 A1 | 04-01-2007 |

EPO FORM P0460

**EP 4 184 801 A1**

## RÉFÉRENCES CITÉES DANS LA DESCRIPTION

### Documents brevets cités dans la description

- US 83444945 B